# DEMANDE DE BREVET EUROPEEN

(11) **EP 1 405 823 A2**
(43) Date de publication de la demande: **07.04.2004**
(21) Numéro de dépôt: 03292233.8
(22) Date de dépôt: 11.09.2003
(51) Int. Cl.: C01B 3/06, C06D 5/06, H01M 8/06, C06B 47/10

(54) **Compositions solides génératrices d'hydrogène par combustion comprenant un borohydrure alcalin ou alcalino-terreux et du nitrate de strontium Sr(NO3)2.**

(30) Priorité: 04.10.2002 FR 0212313
(71) Demandeur: SNPE, 75004 Paris Cedex 04 (FR)
(72) Inventeur: Desgardin, Nancy, 91290 Arpajon (FR); Perut, Christian, 77310 St. Fargeau (FR); Renouard, Joel, 77630 St. Martin en Biere (FR)

(57) **Abrégé**

L'invention concerne une composition solide décomposable en générant de l'hydrogène selon une réaction auto-entretenue de combustion après initiation de cette réaction par une source de chaleur appropriée, cette composition étant caractérisée en ce qu'elle comprend un borohydrure alcalin ou alcalino-terreux et du nitrate de strontium Sr(NO₃)₂·

## Description

La présente invention se situe dans le domaine des générateurs d'hydrogène, gaz largement utilisé comme combustible ou réducteur dans de nombreux procédés industriels ou dispositifs.

Elle a plus précisément pour objet de nouvelles compositions solides décomposables en générant de l'hydrogène selon une réaction auto-entretenue de combustion, et l'utilisation de ces compositions pour alimenter en hydrogène les piles à combustibles à membrane échangeuse de protons.

De nombreuses compositions solides génératrices d'hydrogène par combustion sont connues, notamment pour produire de l'hydrogène destiné à servir de combustible dans les lasers chimiques.

Le brevet US 3 948 699 décrit des compositions solides génératrices d'hydrogène par combustion, constituées d'un mélange de borohydrure alcalin, par exemple le borohydrure de sodium NaBH₄, avec un oxyde métallique, par exemple l'oxyde de fer Fe₂O₃.

Les rendements massiques en hydrogène produit sont toutefois faibles, inférieurs à 5%, exprimés en poids d'hydrogène obtenu par rapport au poids total de la composition.

Le brevet US 4 064 225 décrit d'autres compositions solides génératrices d'hydrogène par combustion, constituées d'un mélange de borohydrure alcalin, par exemple le borohydrure de sodium, avec le sulfate d'ammonium (NH₄)₂SO₄ ou le bichromate d'ammonium (NH₄)₂ Cr₂O₇.

Les rendements massiques sont légèrement plus élevés, de l'ordre de 6%.

De tels rendements en hydrogène, inférieurs ou voisins de 5%, s'avèrent en pratique insuffisants, notamment lorsqu'une miniaturisation des systèmes est recherchée, par exemple lorsqu'on souhaite remplacer les batteries des systèmes électroniques portatifs, tels que téléphones et ordinateurs, par des piles à combustible à hydrogène miniatures.

Le brevet US 4,673,528 décrit une composition solide génératrice d'hydrogène pouvant être sous la forme de pastilles utilisables comme combustibles dans des lasers chimiques. Les compositions génératrices d'hydrogène décrites dans ce brevet sont stables thermiquement et comportent en pourcentage massique entre 5 et 15% d'un oxydant choisi parmi le nitrate de lithium LiNO₃ et le nitrate de potassium KNO₃, de 80 à 90% de borohydrure de magnésium diammoniaque Mg(BH₄)₂, 2NH₃ et éventuellement de 2 à 15% d'un liant tel que le polytétrafluoroéthylène. Les rendements en hydrogène obtenus avec ce type de composition peuvent atteindre 12,5%.

L'homme du métier qui souhaite remplacer les batteries des systèmes électroniques portatifs, tels que téléphones et ordinateurs, par des piles à combustible à hydrogène miniatures, a le souci permanent de rechercher de nouvelles compositions solides génératrices d'hydrogène par combustion parfaitement stables et procurant de meilleurs rendements massiques en hydrogène.

La présente invention propose une solution à ce problème.

Elle a plus précisément pour objet de nouvelles compositions solides décomposables en générant de l'hydrogène selon une réaction auto-entretenue de combustion après initiation de cette réaction par une source de chaleur appropriée, ladite composition comprenant un borohydrure alcalin ou alcalino-terreux et comme sel oxydant, du nitrate de strontium Sr(NO₃)₂·

On a constaté, de façon inattendue, que de telles compositions permettaient de procurer un rendement massique en hydrogène pouvant atteindre 12% selon la nature et les proportions relatives des constituants, ce qui constitue un progrès technique et économique particulièrement intéressant, pour les raisons précitées.

Selon une variante préférée, les compositions selon l'invention sont dépourvues de matière organique, c'est à dire qu'elles sont uniquement constituées de composés minéraux.

De façon particulièrement préférée, elles sont essentiellement constituées d'un borohydrure alcalin ou alcalino-terreux et du nitrate de strontium Sr(NO₃)₂, c'est à dire que ces constituants sont pondéralement majoritaires. On appréciera que la somme des teneurs pondérales en borohydrure alcalin ou alcalino-terreux et en nitrate de strontium Sr(NO₃)₂ soit supérieure ou égale à 75%, mieux encore à 90%, et même à 95%, par rapport au poids total de la composition.

Les compositions uniquement constituées de borohydrure alcalin ou alcalino-terreux et de nitrate de strontium Sr(NO₃)₂, c'est-à-dire dont la somme des teneurs pondérales des deux constituants atteint 100%, sont particulièrement préférées. Par « uniquement constituées » il faut comprendre que les compositions peuvent néanmoins inclure les impuretés présentes dans le borohydrure alcalin ou alcalino-terreux et dans le sel Sr(NO₃)₂ bruts ou purifiés utilisés, ou bien encore des additifs tels que des stabilisants, que ces produits soient commerciaux ou synthétisés selon des méthodes usuelles.

Lorsque les compositions ne sont pas uniquement constituées du borohydrure alcalin ou alcalino-terreux et du nitrate de strontium Sr(NO₃)₂, elles peuvent par exemple également comprendre d'autres borohydrures métalliques, alcalin ou alcalino-terreux, et/ou un hydrure métallique et/ou d'autres sels minéraux oxydants comme les nitrates alcalins, le sulfate d'ammonium, le bichromate d'ammonium et les oxydes de fer.

Selon une autre variante préférée de l'invention, le borohydrure alcalin est choisi dans le groupe constitué par le borohydrure de lithium, le borohydrure de sodium et leurs mélanges.

Selon une autre variante préférée de l'invention, le borohydrure alcalino-terreux utilisé peut être le borohydrure de magnésium Mg(BH₄)₂ qui dispose d'un fort taux d'hydrogène.

De façon générale et préférée, selon l'invention, le rapport teneur pondérale en borohydrure alcalin ou alcalino terreux/teneur pondérale en nitrate de strontium est compris entre 1 et 10, mieux encore compris entre 2 et 10 et préférentiellement entre 4 et 10.
Un but de l'invention est d'obtenir des compositions génératrices d'hydrogène ayant un bon rendement massique d'hydrogène par gramme de composition solide et dont la combustion est effectuée à une température suffisamment élevée pour que la réaction soit auto-entretenue et pour éviter que la composition solide ne s'éteigne et ainsi qu'elle ne soit entièrement consommée. Les proportions pondérales relatives entre l'oxydant et le réducteur devront être établies de manière à atteindre ce but.

Selon une autre variante préférée, les compositions solides selon l'invention se présentent sous forme d'un matériau compact, ayant une forme propre, par exemple et de façon préférée sous forme de pastilles ou de grains. Les grains peuvent avoir une forme quelconque, de préférence sphérique, ovoïde ou cylindrique.

Les pastilles peuvent également avoir une épaisseur et une géométrie périphérique quelconque, par exemple circulaire, elliptique, carrée ou rectangulaire.

L'épaisseur des pastilles peut ne pas être constante.

Les compositions solides selon l'invention peuvent être obtenues par analogie avec les méthodes décrites utilisées pour obtenir les compositions solides précitées de l'état de la technique, par exemple par simple mélange des constituants, broyage puis homogénéisation mécanique. On peut aussi broyer les constituants avant le mélange, ou bien encore utiliser des constituants se présentant déjà sous forme pulvérulente.

Les compositions peuvent également être obtenues par granulation.

Lorsque, de façon préférée, on veut obtenir une composition solide se présentant sous forme d'un matériau compact, le mélange homogène, granulaire ou pulvérulent, des divers constituants peut par exemple être aggloméré par compactage dans un pot de presse ayant la forme et les dimensions recherchées pour le matériau compact.

On peut également obtenir un matériau compact par mise en solution et/ou suspension des constituants dans un milieu liquide. Après homogénéisation et mise dans un moule aux dimensions appropriées et recherchées pour le matériau compact, on élimine le liquide, par exemple par évaporation, ce qui permet d'obtenir un matériau compact.

La présente invention a également pour objet un procédé de génération d'hydrogène par combustion auto-entretenue d'une composition solide comprenant un borohydrure alcalin ou alcalino-terreux et comme sel oxydant, du nitrate de strontium Sr(NO₃)₂·

Selon ce procédé, on réalise tout d'abord une composition solide homogène, pulvérulente ou granulaire, comprenant un borohydrure alcalin ou alcalino-terreux et du nitrate de strontium Sr (NO₃)₂·

On agglomère ensuite cette composition selon des moyens appropriés, par exemple ceux précités, de façon à former un matériau compact, puis on place le matériau compact dans une chambre à combustion que l'on purge sous gaz inerte ou sous vide.

Lorsque le volume mort est faible (volume restant de la chambre après mise en place du matériau compact), une telle purge peut, en pratique, être inutile.

On initie alors la combustion du matériau compact à l'aide d'une source de chaleur appropriée, ce qui provoque la combustion auto-entretenue du matériau avec génération d'hydrogène jusqu'à la fin de la combustion.

Les sources de chaleur appropriées permettant l'initiation de la combustion par effet « Joule » sont bien connues de l'homme du métier, notamment les initiateurs électriques. L'utilisation d'un filament d'allumage nickel-chrome placé en contact ou enrobé avec la composition à initier, auquel on impose une tension et une intensité de courant suffisantes (donc une puissance suffisante), convient parfaitement. On peut par exemple, pour une tension donnée, augmenter l'intensité du courant jusqu'à l'initiation de la combustion.

Dans certains cas, pour favoriser l'allumage, on peut disposer une poudre d'allumage relais classique bien connue de l'homme du métier, entre le filament et le matériau compact. Dans ce cas, de façon préférée, on utilisera une poudre d'allumage relais de même nature que le matériau compact selon l'invention, c'est-à-dire ayant les mêmes constituants, mais dont le rapport teneur pondérale en borohydrure alcalin ou alcalino-terreux / teneur pondérale en nitrate de strontium Sr(NO₃)₂ est nettement inférieur, par exemple compris entre 0,1 et 1.

La présente invention a également pour objet un générateur pyrotechnique d'hydrogène destiné à alimenter en hydrogène une pile à combustible à membrane échangeuse de protons, comprenant une composition solide précitée selon l'invention.

Les piles à combustible fonctionnant à l'hydrogène, encore appelées piles à combustible à membrane échangeuse de protons, sont bien connues de l'homme de métier.

Une telle pile à combustible est essentiellement constituée de 2 parties :
- le coeur de la pile, constitué d'une ou plusieurs cellules électrochimiques montées en série, qui produit l'énergie électrique.
- le réservoir à combustible, à savoir l'hydrogène.

A ces deux parties principales, viennent se greffer des systèmes auxiliaires concernant notamment l'approvisionnement en hydrogène du coeur de la pile, l'évacuation de l'eau produite, ou bien encore le refroidissement.

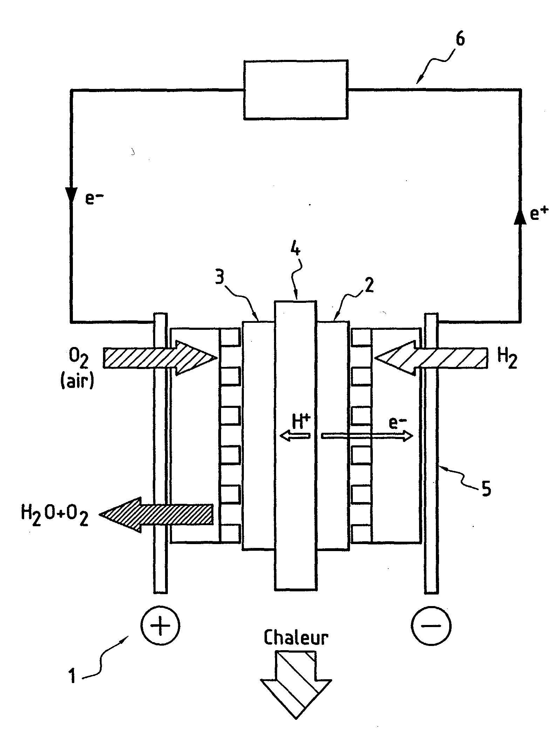

En figure 1 est représentée de manière schématique une cellule électrochimique du coeur de la pile.

On observe sur cette figure 1 qu'une cellule 1 électrochimique du coeur de la pile fournit de l'énergie électrique à partir de deux réactions électrochimiques réalisées sur deux électrodes 2 et 3 en général constituées de carbone et séparées par une membrane 4 échangeuse de protons jouant le rôle d'électrolyte et en général constituée de polymères fluorés imprégnés d'eau. Sur l'anode 2, en présence d'un catalyseur en général à base de platine, l'hydrogène H₂ est oxydé se séparant en protons H⁺ et électrons e⁻. Le flux de protons H⁺ traverse la membrane 4 alors que les électrons e- ne pouvant pas passer la membrane 4 sont captés par un collecteur de courant 5 relié à un circuit électrique 6 externe pour rejoindre la cathode 3. De l'autre côté de la membrane 4, au niveau de la cathode 3, les protons H⁺ et les électrons e- se recombinent avec de l'oxygène O₂ provenant en général de l'air ambiant, pour produire de l'eau H₂O.

Les générateurs pyrotechniques d'hydrogène selon l'invention sont essentiellement constitués d'une ou plusieurs chambres dans lesquelles on place une composition solide selon l'invention, de moyens séparés d'initiation de la combustion de la composition dans chacune des chambres, de moyens de commande de cette initiation, et de moyens de transfert de l'hydrogène libéré dans les chambres vers l'anode d'une cellule du coeur de la pile.

De façon préférée, la quantité globale d'hydrogène susceptible d'être fourni par le générateur est libérée de façon discontinue par une initiation distincte des compositions solides contenues dans les diverses chambres. La masse de composition solide dans chaque chambre peut être identique ou différente d'une chambre à l'autre. Cette dernière variante permet une libération d'hydrogène en quantité adaptée à un besoin ponctuel.

Les diverses chambres peuvent déboucher sur une chambre d'expansion de l'hydrogène libéré reliée au compartiment anodique d'une cellule, ou dont l'une des parois est au moins partiellement formée par l'anode.

La présente invention a également pour objet une pile à combustible à membrane échangeuse de protons utilisant l'hydrogène comme combustible, comprenant au moins une cellule électrochimique et un générateur pyrotechnique d'hydrogène précité selon l'invention relié au compartiment anodique de la cellule.

Les exemples non limitatifs suivants illustrent l'invention et les avantages qu'elle procure.

### Exemple 1 Composition solide constituée d'un mélange de NaBH₄ et de Sr(NO₃)₂ dans les proportions pondérales relatives 60/40 respectivement.

On broie puis homogénéise un mélange de 90g de NaBH₄ et 60g de Sr(NO₃)₂.

Une fraction du mélange pulvérulent et homogène ainsi obtenu est ensuite introduite puis compactée dans la matrice de compression d'une pastilleuse ayant la géométrie de pastille recherchée, sous une pression de 10⁷Pa (100 bar).

On introduit ensuite la pastille circulaire ainsi obtenue de diamètre 5mm et de masse 80mg dans une chambre à combustion de volume 10cm³, munie d'un manomètre, d'une sonde de température et d'un dispositif d'allumage usuel comprenant un filament nickel (80% en poids) - chrome (20% en poids). La pastille est mise au contact du filament puis on purge la chambre avec un gaz inerte (azote) sous pression absolue de 10⁵Pa (1 bar).

On chauffe ensuite le filament par effet Joule jusqu'à l'initiation de la composition

Une fois initiée, la combustion de la composition est auto-entretenue et dure environ 3 s.

La température de combustion mesurée expérimentalement d'après la pression maximale varie suivant les tirs entre 480 et 600°K environ.

La combustion terminée, on laisse refroidir la chambre à la température ambiante puis on note la pression dans la chambre.

L'augmentation de pression mesurée et l'analyse des gaz présents après combustion par chromatographie couplée à un spectromètre de masse permet de calculer un rendement massique en hydrogène de 5,32 à 5,88%, exprimé en gramme d'hydrogène libéré par gramme de composition solide.

Des analyses ATD ont été effectuées sur cette composition de borohydrure de sodium NaBH4 et de Sr(NO₃)₂ à 60/40 pour savoir si elle était stable.

L'ATD ou DTA (pour Differential Thermal Analysis) est un test de mesure calorimétrique. Il consiste à chauffer la composition de 15 à 200°C en augmentant la température de 8°C par minute. Lors de cette élévation de température, ce test consiste à relever les températures des pics endothermiques ou exothermiques et à mesurer l'énergie libérée ou absorbée. Si aucune énergie n'est libérée ou absorbée, cela signifie que la composition est stable et donc que les constituants de la composition analysée cohabitent bien.

Les tests réalisés sur la composition de l'exemple 1 NaBH₄/Sr(NO₃)₂ à 60/40 montrent que cette composition est stable. En effet, au cours du test ATD, aucune énergie n'a été libérée ou absorbée lors de l' élévation de température.

Dans les exemples 2 à 8, on procède exactement de la même manière en modifiant seulement les proportions pondérales relatives entre les deux constituants.

Le tableau 1 ci-dessous montre, pour chacun des exemples 1 à 7, d'une part, les résultats obtenus expérimentalement, et d'autre part, les résultats obtenus par calculs. Pour chacun des exemples, deux ou trois essais ont été effectués, mais seul le résultat moyen apparaît. Pour certains des exemples, aucune expérience n'a encore été menée et donc seuls apparaissent les résultats obtenus de manière théorique.

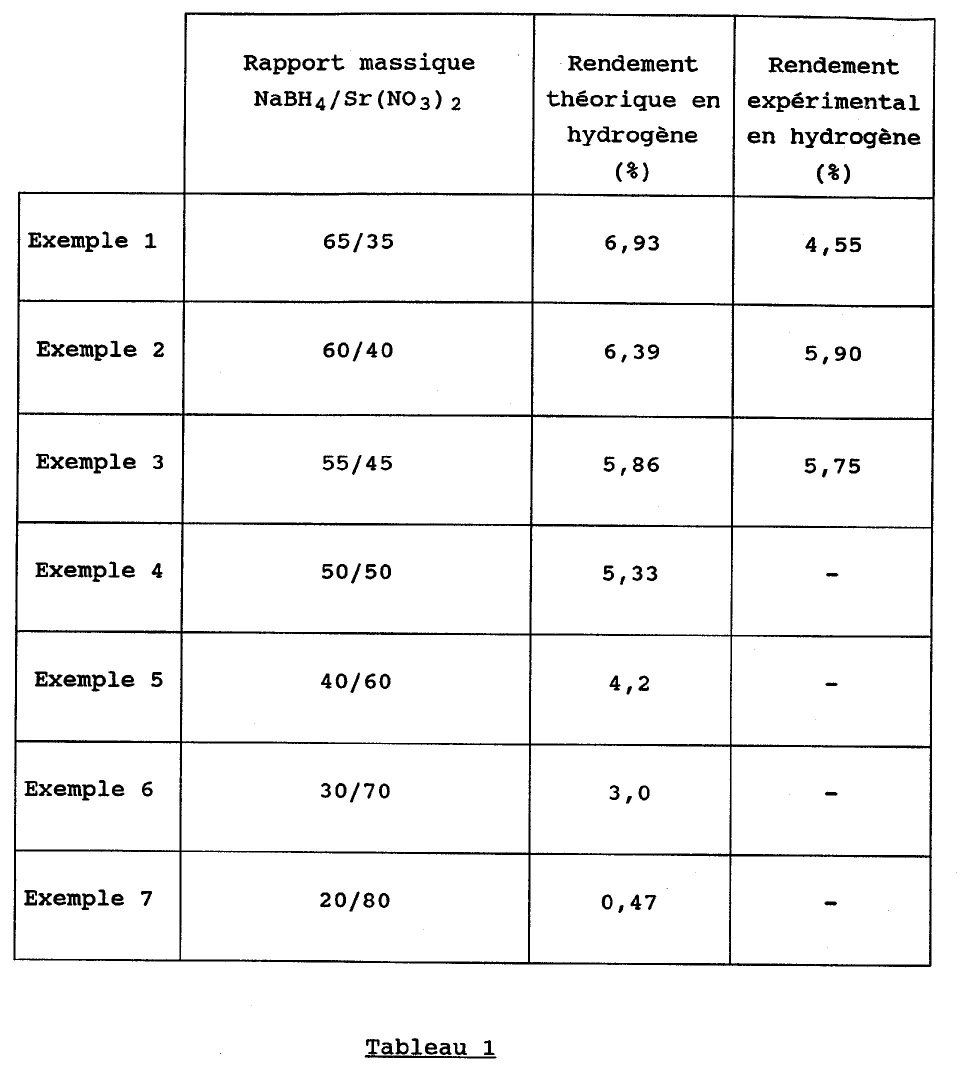

Le rendement théorique en hydrogène diminue bien entendu lorsque la proportion de réducteur porteur d'hydrogène diminue. Le rendement mesuré ne correspond toutefois au rendement théorique que pour des valeurs de températures de combustion suffisamment élevées.

### Exemples 8 à 14 Compositions solides constituées d'un mélange de LiBH₄/Sr(NO₃)₂ dans différentes proportions pondérales relatives.

Dans cet exemple, on remplace le borohydrure de sodium NaBH₄ par du borohydrure de lithium LiBH₄. On opère exactement de la même manière que dans l'exemple 1 décrit ci-dessus, c'est-à-dire avec l'obtention d'une pastille de même masse. Comme dans les exemples 1 à 7 ci-dessus, on fait varier les proportions pondérales relatives entre les deux constituants.

Les résultats théoriques calculés pour les différentes compositions sont visibles dans le tableau 2 ci-dessous :

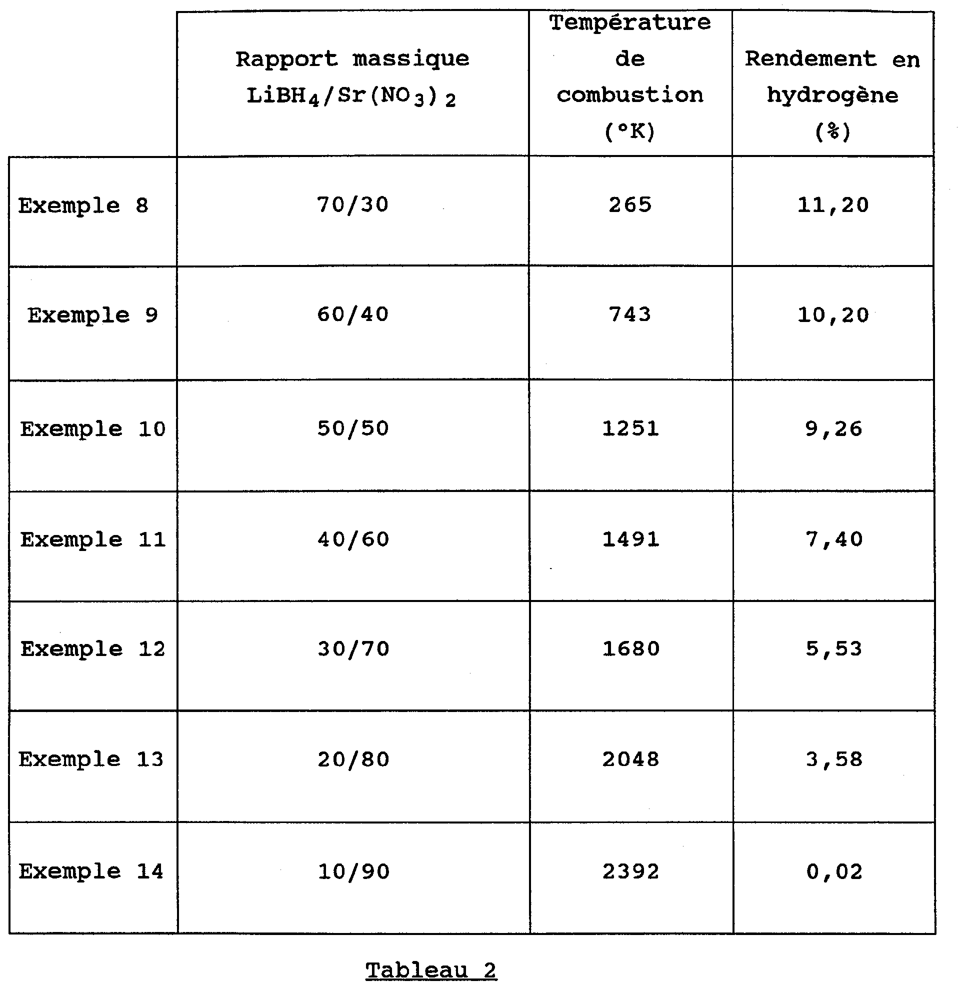

Les tests réalisés sur la composition de l'exemple 9 LiBH₄/Sr(NO₃)₂ à 60/40 montrent que cette composition n'est pas complètement stable. En effet, au cours du test ATD, une absorption d'énergie de 112 J/gramme a été observé entre 113 et 124°C.

### Exemples 15 à 22

Dans ces exemples, on n'utilise plus un borohydrure alcalin comme NaBH₄ ou LiBH₄ mais un borohydrure alcalino-terreux Mg(BH₄)₂ et on utilise toujours comme oxydant le nitrate de strontium Sr(NO₃)₂. On procède de la même manière que dans les exemples précédents avec différentes proportions pondérales relatives entre les deux constituants. Les résultats théoriques obtenus par calculs sont visibles dans le tableau 3 ci-dessous:

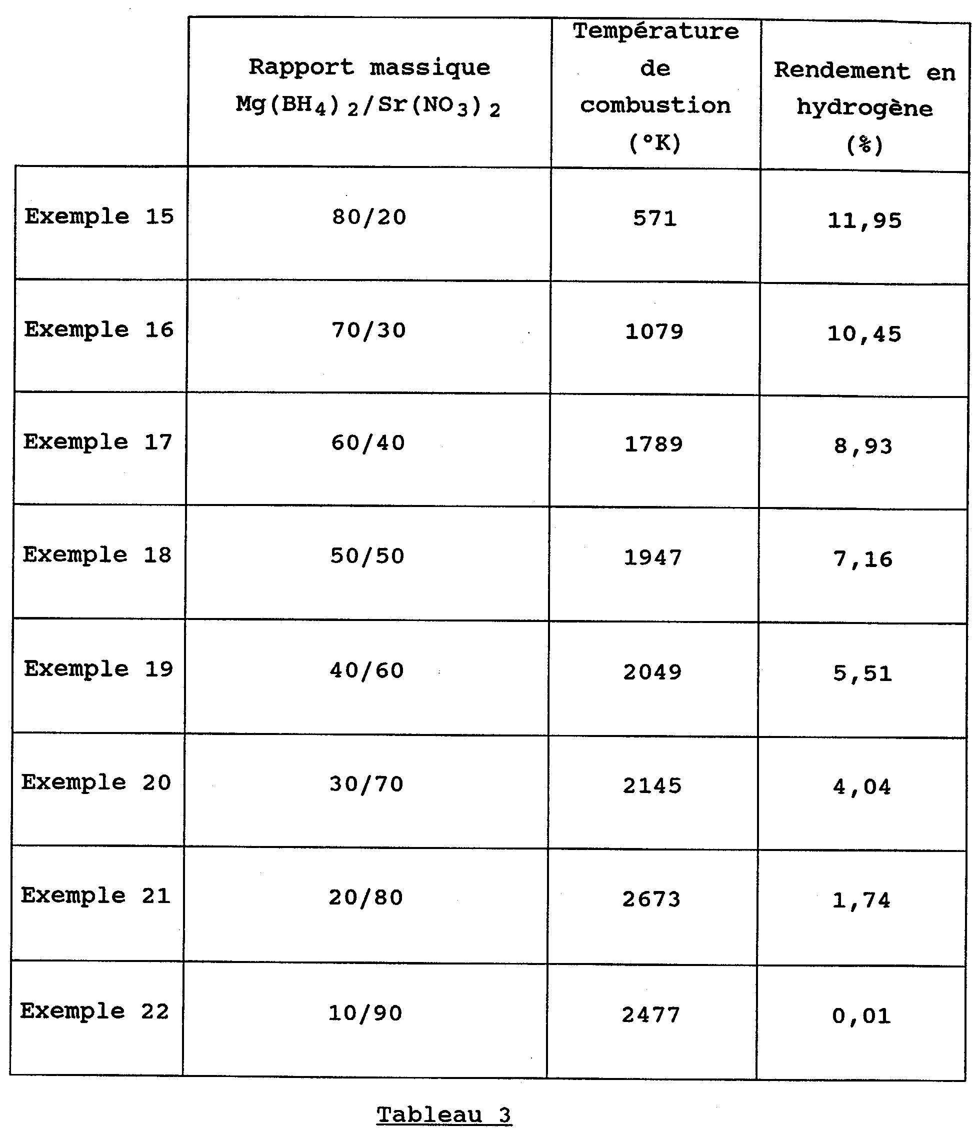

Des mesures ont été effectuées avec une pastille ayant les deux constituants avec des proportions pondérales relatives entre le Mg(BH₄)₂ et le nitrate de strontium Sr(NO₃)₂ respectivement de 70/30. On a obtenu comme résultats, un rendement massique de H₂, exprimé en gramme d'hydrogène libéré par gramme de composition solide, de 9,55%.

## Revendications

1. Composition solide décomposable en générant de l'hydrogène selon une réaction auto-entretenue de combustion après initiation de cette réaction par une source de chaleur appropriée, **caractérisée en ce que** ladite composition comprend un borohydrure alcalin ou alcalino-terreux et du nitrate de strontium Sr(NO₃)₂.

2. Composition solide selon la revendication 1, **caractérisée en ce qu'**elle se présente sous forme d'un matériau compact.

3. Composition solide selon la revendication 2, **caractérisée en ce que** le matériau compact est une pastille ou un grain.

4. Composition solide selon la revendication 1, **caractérisée en ce qu'**elle est dépourvue de matière organique.

5. Composition solide selon la revendication 1, **caractérisée en ce qu'**elle est essentiellement constituée du borohydrure alcalin ou alcalino-terreux et du nitrate de strontium Sr(NO₃)₂.

6. Composition solide selon la revendication 1, **caractérisée en ce que** la somme des teneurs pondérales en borohydrure alcalin ou alcalino-terreux et en nitrate de strontium Sr(NO₃)₂ est supérieure ou égale à 90% par rapport au poids total de la composition.

7. Composition solide selon la revendication 1, **caractérisée en ce que** le borohydrure alcalin est choisi dans le groupe constitué par le borohydrure de lithium, le borohydrure de sodium et leurs mélanges.

8. Composition solide selon la revendication 1, **caractérisée en ce que** le borohydrure alcalino-terreux est le borohydrure de magnésium.

9. Composition solide selon la revendication 1, **caractérisée en ce que** le rapport teneur pondérale en borohydrure alcalin ou alcalino-terreux/teneur pondérale en nitrate de strontium Sr(NO₃)₂ est compris entre 1 et 10.

10. Procédé de génération d'hydrogène par combustion auto-entretenue d'une composition solide comprenant un borohydrure alcalin ou alcalino-terreux et du nitrate de strontium Sr(NO₃)₂ **caractérisé en ce que** :
- on réalise une composition solide homogène, pulvérulente ou granulaire comprenant un borohydrure alcalin ou alcalino-terreux et du nitrate de strontium Sr(NO₃)₂,
- on agglomère ensuite cette composition selon des moyens appropriés de façon à former un matériau compact,
- on place le matériau compact dans une chambre à combustion,
- on initie la combustion du matériau compact à l'aide d'une source de chaleur appropriée, ce qui provoque la combustion auto-entretenue du matériau avec génération d'hydrogène jusqu'à la fin de la combustion.

11. Générateur d'hydrogène destiné à alimenter en hydrogène une pile à combustible à membrane échangeuse de protons, **caractérisé en ce que** ce générateur est un générateur pyrotechnique comprenant une composition solide selon la revendication 1.

12. Pile à combustible à membrane échangeuse de protons utilisant l'hydrogène comme combustible, comprenant au moins une cellule (1) électrochimique et un générateur d'hydrogène relié au compartiment anodique de la cellule (1), **caractérisée en ce que** ce générateur d'hydrogène est un générateur pyrotechnique selon la revendication 11.
